# EUROPÄISCHE PATENTANMELDUNG

(11) **EP 0 992 765 A1**
(43) Veröffentlichungstag der Anmeldung: **12.04.2000**
(21) Anmeldenummer: 99119885.4
(22) Anmeldetag: 07.10.1999
(51) Int. Cl.: G01D 5/20, G01D 5/22

(54) **Induktives Wegmesssystem**

(30) Priorität: 09.10.1998 DE 19846539
(71) Anmelder: Mahr GmbH, 37073 Göttingen (DE)
(72) Erfinder: Fahl, Christoph, 37075 Göttingen (DE)
(74) Vertreter: Patentanwälte Rüger, Barthelt & Abel

(57) **Zusammenfassung**

Eine lineare Wegmesseinrichtung (1) weist einen induktiven Wegaufnehmer (2) auf, der drei koaxial zu einem gemeinsamen Kern (12) angeordnete Spulen (5, 6, 11) aufweist. Bei einer ersten Ausführungsform sind die äußeren Spulen (5, 6) von einer Wechselspannung erregt, während die mittlere Spule (11) als Sekundärspule zum Spannungsabgriff dient. Eine Verschiebung des Kerns (12) bewirkt eine Veränderung von Größe und Phasenlage der an der Spule (11) abgegriffenen Spannung. Bei einer zweiten Ausführungsform ist die mittlere Spule (11) durch eine Wechselstromquelle erregt, während die äußeren Spulen (5, 6) dem Spannungsabgriff dienen. Bei beiden Ausführungsformen wird eine gegenüber herkömmlichen induktiven Wegaufnehmern erheblich verbesserte Linearität erreicht.

## Beschreibung

Die Erfindung betrifft ein induktives Wegmesssystem, insbesondere zur präzisen Bestimmung von linearen Verschiebungen.

Induktive Wegmesssysteme sind bspw. aus der Praxis bekannt. Diese sind z.B. als Differentialtransformator mit verschiebbarem Kern aus ferromagnetischem Material ausgebildet. Der Differentialtransformator weist eine Primärspule zur Erregung des verschiebbaren Kerns und zwei Sekundärspulen auf, in denen in Abhängigkeit von der aktuellen Position des Kerns unterschiedlich große Spannung induziert werden.

Die beiden Sekundärspannungen werden gegenphasig abgegriffen. Im Nullpunkt, d.h. bei nicht ausgelenktem Kern, sind die beiden induzierten Sekundärspannungen gleich groß, jedoch um 180° phasenversetzt, also entgegengesetzt gerichtet. Die Spannungsdifferenz ist Null. Bei Gleichrichtung der Spannungen und Bildung der Spannungsdifferenz tritt die Ausgangsspannung Null auf. Wird der Kern aus seiner Mittellage heraus verschoben, entsteht durch Auswertung der beiden Sekundärspannungen eine Ausgangsspannung mit positiven oder negativen Vorzeichen, je nach Auslenkrichtung des Kerns, wobei die Größe der Ausgangsspannung in etwa proportional zu der Auslenkung ist.

Mit linearen Wegaufnehmern lassen sich hochempfindliche Messeinrichtungen aufbauen, die Verlagerungen des Kerns im µm-Bereich erfassen können. In dem Messbereich von bspw. 2 mm Länge treten Linearitätsfehler in der Größenordnung über 10 µm auf.

Ein etwas anderer Längenmesstaster mit verbesserter Linearität ist aus der EP 0480222 A2 bekannt. Dieser Längenmesstaster weist eine Primärspule auf, die zwischen zwei Sekundärspulen angeordnet ist. Zur Erfassung eines Wegs werden die Spulen gegeneinander bewegt. Dies ist jedoch nicht in jedem Fall erwünscht.

Vor diesem Hintergrund ist es Aufgabe der Erfindung, einen induktiven Wegaufnehmer zu schaffen, der eine verbesserte Linearität aufweist.

Diese Aufgabe wird mit einen Längenmesstaster nach Anspruch 1, oder alternativ durch einen Längenmesstaster nach Anspruch 14 gelöst:

Der Längenmesstaster weist zwei auch als Primärspulen bezeichnete Erregerspulen und eine zwischen diesen angeordnete Abnahmespule oder Sekundärspule auf. Ein alle drei Spulen durchsetzender gemeinsamer Kern ist längsverschiebbar gelagert. Die außenliegenden Primärspulen sind vorzugsweise gegensinnig angesteuert, so dass sie entgegengesetzt gerichtete Axialflüsse erzeugen. Diese sind bis in die Sekundärspule hinein entgegengesetzt gerichtet, so dass ein Teil der Sekundärspule eine positive, und ein anderer Teil der Sekundärspule eine negative Spannung erzeugt. An den Klemmen der Sekundärspule tritt die Summe aus beiden Teilspannungen und somit der überwiegende Flussanteil als Spannung in Erscheinung. Ist der Kern bspw. nicht verschoben, heben sich die Wirkungen der beiden Axialflüsse, die sich etwa in Spulenmitte treffen, gegenseitig so weit auf, dass keine Sekundärspannung auftritt. Wird der Kern axial in der einen oder anderen Richtung verschoben, kann einer der Flüsse überwiegen und es tritt eine mehr oder weniger große Induktionsspannung mit einer Phasenlage auf, die der Verschiebungsrichtung entspricht.

Die Linearität des Längenmesstasters ist dann besonders gut, wenn erreicht wird, dass der ausgangsseitig unbelastete Längenmesstaster einen konstanten Primärstrom erhält. Dies kann erreicht werden, indem die außenliegenden Spulen der Spulenanordnung gegensinnig in Reihe geschaltet werden, so dass die Primärinduktivität weitgehend unabhängig von der Kernverschiebung wird. Der Längenmesstaster kann an einen Verstärkerausgang mit geringem Innenwiderstand angeschlossen, d.h. mit einer Spannung gespeist werden, ohne dass eine Kernverschiebung eine wesentliche Primärstromänderung hervorrufen würde. Dies ermöglicht es, den Kern so lang auszulegen, dass an seinen Stirnseiten auftretende Feldverzerrungen von den in der Nähe der Kernenden angeordneten Spulen fern gehalten werden. Außerdem kann der Längenmesstaster im Zusammenwirken mit vorgegebenen Speisequellen ohne gesonderte Anpassung an deren Innenwiderstand eingesetzt werden. Der Längenmesstaster kann passend für alle gebräuchlichen Frequenzen, Spannungen, Eingangswiderstände ausgelegt werden. Er weist keine durch die Magnetkreisgeometrie hervorgerufenen nichtlinearen Effekte auf. Die Kernlänge hat im Prinzip keinen Einfluss auf die Linearität. Das ermöglicht größere Kernlängentoleranzen und Messbereichsvergrößerung durch Kernverlängerung.

Die Sekundärspule kann eine einzige mittlere Spule oder eine Reihenschaltung zweier nebeneinander angeordneter Spulen sein. In jedem Fall ist die Sekundärspule oder, wenn mehrere Sekundärspulen vorhanden sind, die Sekundärspulenanordnung vorzugsweise in einem Bereich angeordnet, in dem das aus dem Kern austretende und die Spule durchsetzende Magnetfeld im Wesentlichen homogen ist, d.h. in dem sich die magnetischen Kraftlinien im Wesentlichen in Radialrichtung bezüglich der Spulenachse erstrecken. Die erreichte Linearität ist unabhängig von der Qualität des Wicklungsaufbaus der Spulen, insbesondere der Sekundärspule. Messbereich und Empfindlichkeit lassen sich durch Ändern der Kernlänge festlegen. Die Lastimpedanz koppelt quadratisch in den Primärkreis, was es ermöglicht, Abweichungen, die sich in einem Polynom durch höhere ungeradzahlige Potenzen beschreiben lassen, zu kompensieren.

Durch die erfindungsgemäße Anordnung ist die Sekundärspule relativ weit von den beiden stirnseitigen Enden des Kerns entfernt, an denen Feldverzerrungen auftreten. Sind bislang bei induktiven Wegaufnehmern in der Spannungs-Weg-Kennlinie außerdem gewünschten linearen Anteil auch relativ starke Anteile dritter Ordnung sowie höherer Ordnung erhalten gewesen, sind diese Anteile bei der erfindungsgemäßen Einrichtung nahezu vollständig eliminiert. Dies ohne dass dadurch größere Nachteile in Kauf zu nehmen gewesen wären. Dies wurde erreicht, indem die Sekundärspule zwischen den Primärspulen angeordnet worden ist.

Bei einer bevorzugten Ausführungsform sind die Primärspulen gegenphasig so angesteuert, dass die von ihnen erzeugten Flüsse entgegengesetzt gerichtet und vom Betrag her gleich groß sind. Dies kann durch entsprechende Bemessung der Windungszahlen und der Ansteuerspannungen erreicht werden. Bei einer einfachen Form sind die Spulen gegensinnig in Reihe geschaltet und an einen Verstärkerausgang angeschlossen. Dieser ist vorzugsweise ein niederohmiger Spannungsausgang. Bei vorgegebener Frequenz sind die von den beiden Primärspulen jeweils erzeugten Flüsse unabhängig von der aktuellen Kernpostion konstant. Die Kernverschiebung verändert somit nicht die Größe der Flüsse, sondern nur die Lage des Punkts an dem Kern, an dem sich die entgegengesetzt gerichteten Axialflüsse gerade aufheben. Allerdings können die Primärspulen auch von einem Stromgenerator erregt sein.

Die Ausführungsform mit zwei gegensinnigen Primärspulen hat den Vorzug, dass die hervorgerufenen entgegengerichteten Axialflüsse etwa nur halb so groß sind wie bei Systemen mit einer einzigen Primärspule. Damit wird die magnetische Induktion und somit der Einfluss nichtlinearer Materialkennlinien des Kerns und eines Rückschlussteils geringer.

Es kann vorteilhaft sein, die Primärspulen länger auszubilden als die Sekundärspule. Dadurch können bei gegebener Windungszahl größere Drahtquerschnitte genutzt werden, um ohmsche Verluste in den Primärspulen gering zu halten.

Außerdem kann die Sekundärspule mit einem Widerstand oder einem Kondensator, vorzugsweise mit einem RC-Element definiert beschaltet werden. Durch diese ausgangsseitige Belastung können an dem Längenmesstaster, der im Leelauf einen konstanten Primärstrom aufweist, im Betriebsfall Stromänderungen in Abhängigkeit von der Verlagerung des Kerns gezielt hervorgerufen werden. Diese können dazu herangezogen werden, Nichtlinearitäten der nachgeordneten Mess- oder Auswerteschaltung oder durch Materialkennlienien hervorgerufene Nichtlinearitäten, Kabelkapazitäten Phasenfehler und andere Fehlereinflüsse zu kompensieren.

Der Kern ist vorzugsweise aus einem Ferrit oder einem anderweitigen Material hoher Permeabilität ausgebildet. Dabei wird eine zylindrische Bauform bevorzugt, die infolge der Rotationssymmetrie wenig störanfällig ist und eine kompakte Bauform ermöglicht ist. Jedoch kann der Kern bedarfsweise auch prismatisch oder anderweitig geformt sein.

Es wird als vorteilhaft angesehen, außerhalb der Spulen ein magnetisches Rückschlussteil anzuordnen, das vorzugsweise rohrförmig ist. Es kann bedarfsweise einen runden oder auch davon abweichenden Querschnitt aufweisen. Es kann auch durch mehrere, sich parallel zu dem Kern erstreckende Flussleitteile gebildet sein. Das magnetische Rückschlussteil, das aus einem Ferrit oder einem anderweitigen Material hoher Permeabilität ausgebildet sein sollte, schirmt zugleich den Innenraum ab, in dem das Messsystem angeordnet ist. Es vermeidet somit verfälschende Einflüsse magnetischer Störfelder.

Seine Länge ist vorzugsweise größer als die des Kerns, der bei einer vorteilhaften Ausführungsform seinerseits so lang bemessen ist, dass er mit seinen beiden Enden in jeder Auslenkposition aus der Spulenanordnung herausragt.

Es hat sich herausgestellt, dass die Aufgabe alternativ mit einem Längenmesstaster gelöst werden kann, der eine etwa mittig angeordnete Primärspule und zwei Sekundärspulen aufweist, die den gemeinsamen verschiebbar gelagerten Kern umgeben, wenn die Primärspule stromgespeist ist. Damit wird anders als bei der vorstehend beschriebenen Version nicht an den Endbereichen des Kerns der Fluss, sondern in der Mitte eine magnetische Urspannung eingeprägt, die nur von der Größe des Stroms und der Windungszahl der Primärspule abhängt. Erforderlich ist allerdings eine Stromquelle mit praktisch unendlich großem Innenwiderstand.

Mit beiden Bauformen lassen sich lineare Messbereiche von 2 mm und darüber erzielen. Trotz endlicher magnetischer Widerstände an dem Kern und dem magnetischen Rückschlussteil (Mantel) sowie Spannungsabfällen an den Spulen, kann der Linearitätsfehler gegenüber herkömmlichen Wegaufnehmern wesentlich gesenkt werden. Erreichbar sind ein Promille und besser.

Unabhängig von der konkreten Bauform ist an die Sekundärspulen eine Spannungsdetektorschaltung angeschlossen, die bspw. als phasenabhängiger Gleichrichter ausgebildet ist. Die Spannungsdetektorschaltung kann eine Multipliziererschaltung sein, die das von den Sekundärspulen oder der Sekundärspule hergeleitete Spannungssignal mit einem Referenzsignal multipliziert. Vorzugsweise wird ein Vierquadrantenmultiplizierer verwendet.

Vorteilhafte Einzelheiten von Ausführungsformen der Erfindung sind Gegenstand von Unteransprüchen, der Zeichnung und/oder der Beschreibung.

In der Zeichnung sind Ausführungsbeispiele der Erfindung veranschaulicht. Es zeigen:
- Fig. 1: eine Wegmesseinrichtung mit einem induktiven Wegaufnehmer und einer Ansteuer- und Auswerteschaltung, in schematischer Darstellung,
- Fig. 2: den induktiven Wegaufnehmer der Wegnessschaltung nach Figur 1, in längsgeschnittener schematisierter Darstellung,
- Fig. 3: den Wegaufnehmer nach Figur 2, in einer weiter schematisierten Darstellung zur Veranschaulichung der Flussverhältnisse, und
- Fig. 4: eine Wegmesseinrichtung mit einem induktiven Wegaufnehmer in einer alternativen Ausführungsform.

### Beschreibung:

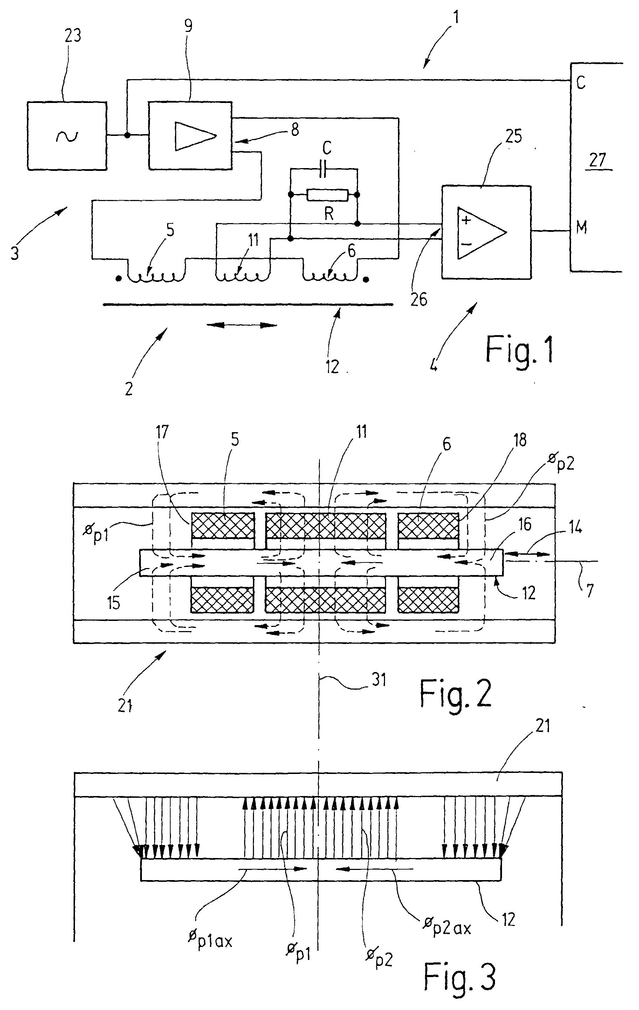

In Figur 1 ist eine lineare Wegmesseinrichtung 1 veranschaulicht, zu der ein induktiver Wegaufnehmer 2, eine Ansteuerschaltung 3 und eine Auswerteschaltung 4 gehören. Der Wegaufnehmer 2 weist eine Spulenanordnung S mit zwei Primärspulen 5, 6 auf, die mit axialem Abstand zueinander ortsfest so angeordnet sind, dass sie eine gemeinsame Spulenachse 7 (Figur 2) festlegen. Die Spulen 5, 6 weisen übereinstimmende Windungszahlen auf, sind entgegengesetzt in Reihe geschaltet und an einen Ausgang 8 eines Verstärker 9 angeschlossen. Dieser weist einen niedrigen Ausgangswiderstand auf, so dass er für die Spulen 5, 6 eine Wechselspannungsquelle darstellt.

Zwischen den beiden Primärspulen 5, 6 ist ortsfest eine Sekundärspule 11 angeordnet, die koaxial zu der gemeinsamen Spulenachse 7 ausgerichtet ist. Die Sekundärspule 11 kann unmittelbar an die Primärspulen 5, 6 anschliessen oder einen gewissen axialen Abstand zu diesen einhalten. Bedarfsweise können die Primärspulen in Axialrichtung größer als die Sekundärspule 11 sein, was es ermöglicht, für die Primärspulenanordnung große Drahtquerschnitte zu verwenden. Die Windungszahl der Sekundärspule kann von der Windungszahl der Primärspulen abweichen.

Die Primärspulen 5, 6 und die Sekundärspule 11 sind unverschiebbar auf einem nicht weiter dargestellten Spulenträger angeordnet, der im Wesentlichen koaxial zu der Spulenachse 7 einen Durchgang aufweist, in dem ein Kern 12 längs verschiebbar angeordnet ist. Dies ist in Figur 2 durch einen Doppelpfeil 14 veranschaulicht. Der Kern 12 ist aus Ferrit oder einem anderweitigen hysteresearmen- oder -freien Material relativ hoher Permeabilität hergestellt. Seine Länge ist so bemessen, dass er mit seinen beiden Enden 15, 16 in jeder Axialposition, die er im Rahmen des Messbereichs einnehmen kann, aus den Primärspulen 5, 6 herausragt. Vorzugsweise ist der Kern 12 mindestens so lang, wie die Summe aus dem Abstand voneinander weg weisender Stirnflächen 17, 18 der beiden Primärspulen 5, 6 und der maximalen Länge der Sekundärspule 11. Bedarfsweise kann er länger ausgebildet sein.

Die Primärspulen 5, 6 und die Sekundärspule 11 werden von einem rohrförmig ausgebildeten Rückschlussteil 21 umgeben, das vorzugsweise deutlich länger ausgebildet ist als der Kern 12. Das Rückschlussteil 21 bildet einen Mantel um die aus Primärspulen 5, 6, Sekundärspule 11 und Kern 12 gebildete Sensoreinrichtung und ist zugleich Teil derselben. In seiner einfachsten Bauform ist das Rückschlussteil 21 ein zylindrisches Rohr aus einem hochpermeablen Material, bspw. Ferrit oder einer Eisenlegierung. Bedarfsweise kann das Rohr zu beiden Seiten der axialen Stirnseiten 17, 18 auch verengt sein oder rohrförmige Einsatzteile aufnehmen. Auch ohne diese Teile legt der Kern 12 über seine gesamte Länge einen hohlzylindrischen Luftspalt gleicher Dicke zu dem Rückschlussteil 21 fest.

Zu der Ansteuerschaltung 3 gehört außer dem Verstärker 9 ein Wechselspannungsgenerator 23, der eine Wechselspannung geeigneter Kurvenform, Frequenz und Amplitude abgibt. Bspw. ist der Generator 23 ein Sinusgenerator, jedoch kommen auch andere Kurvenformen in Betracht.

An die Anschlüsse der Sekundärspule 11 sind ein Widerstand R und parallel zu diesem ein Kondensator C angeschlossen. Diese stellen eine Last für den Längenmesstaster 2 dar, die eine gewisse Abhängigkeit des Eingangsstroms des Längenmesstasters 2 von der Verschiebeposition des Kerns 12 bewirken kann. Diese Abhängigkeit kann zur Kompensation nichtlinearer Effekte benutzt werden. Außerdem lässt sich eine Phasenkompensation bewirken.

Die Auswerteschaltung 4 weist einen linearen Verstärker 25 auf, der gegebenenfalls über ein Kabel mit seinem Eingang 26 an die Sekundärspule 11 angeschlossen ist. Der Eingang 26 schliesst das Kabel ab, das an die Sekundärspule 11 angeschlossen ist. Der Verstärker 25 ist außerdem so bemessen, dass er bei keiner der an der Sekundärspule 11 und seinem Eingang 26 auftretenden Spannungen in die Sättigung gerät. Ist die Induktionsspannung an der Sekundärspule 11 groß genug, kann der Verstärker weg gelassen werden oder durch einen Impedanzwandler ersetzt sein.

An den Ausgang des Verstärkers 25 sowie an den Ausgang des Generators 23 oder einen anderweitigen Ansteuersignal führenden Schaltungspunkt ist eine Detektorschaltung 27 angeschlossen, die bspw. als phasenabhängiger Gleichrichter ausgebildet ist. In diesem Fall weist sie zwei Eingänge C, M auf. An ihrem Eingang C erhält sie ein Referenzsignal (Generatorsignal) mit unveränderlicher Amplitude. An ihrem Eingang M erhält sie das von der Sekundärspule 11 angegebene und ggfs. verstärkte Signal dessen Amplitude und Phase von der Axialposition des Kerns 12 abhängig ist und dessen Phasenlage in Bezug auf das Ansteuersignal von der Verschiebungsrichtung abhängig ist.

Die insoweit beschriebene Wegmesseinrichtung 1 arbeitet wie folgt:

In Betrieb erzeugt der Generator 23 ein Signal, das über den Ausgang 8 des Verstärkers 9 gegenphasig als Ansteuerspannung an die Primärspulen 5, 6 gelangt. Diese erzeugen dadurch die in Figur 2 schematisch angedeuteten Flüsse ϕₚ₁ und ϕₚ₂. Die Flüsse ϕₚ₁und ϕₚ₂ durchsetzen dabei die Primärspulen 5, 6 in einander entgegengesetzten Richtungen und treten im Bereich der Sekundärspule 11 in das magnetische Rückschlussteil 21 über. Von dort ausgehend kehren sie zu der jeweiligen Gegenseite der Primärspulen 5, 6 zurück und treten bei den Enden des Kerns 12 wieder in diesen ein.

Die aufeinander zu oder voneinander weg gerichteten Axialflüsse kompensieren sich gegenseitig im Bereich einer Neutralebene 31, die in Figur 2 strichpunktiert angedeutet ist. Die Position dieser Neutralebene ist von der Position des Kerns 12 abhängig. Sie teilt, wie Figur 3 veranschaulicht, den Fluss ϕₚ₁ von dem Fluss ϕₚ₂ im Bereich eines im Wesentlichen homogenen Radialfelds, das die Sekundärspule 11 durchsetzt. Bei gleich großen Flüssen ϕₚ₁ und ϕₚ₂ ist die Nulllage des Kerns 12 als Mittellage festgelegt, in der die Ebene 31 die Sekundärspule 11 mittig trifft. Damit umfassen die Hälfte der Windungen der Sekundärspule 11 den Axialflussanteil ϕₚ₁ von ϕₚ₁ und die andere Hälfte der Windungen der Sekundärspule 11 die Axialkomponente ϕₚ₂ₐₓ des Flusses ϕₚ₂. Die Axialkomponenten ϕₚ₁ₐₓ und ϕₚ₂ₐₓ sind einander entgegengesetzt gerichtet, so dass folglich die in der Sekundärspule 11 induzierten Spannungen in den betreffenden Windungen entgegengesetzt gerichtet sind. An den äußeren Anschlüssen der Sekundärspule 11 wird somit die Summe aller Spannungen abgegriffen, die Null ist.

Eine Verschiebung des Kerns 12 in den Figuren 2 und 3 nach einer Richtung, lässt bei im Wesentlichen, d.h. qualitativ unverändertem Feldbild die Neutralebene 31 in Bezug auf die Sekundärspule 11 nach der Gegenrichtung wandern. Die Neutralebene 31 läuft dem Kern 12 gewissermaßen entgegen. Dadurch ändert sich das Verhältnis der den Fluss ϕₚ₁ₐₓ umfassenden Windungen der Sekundärspule 11 zu den Windungen, die den Fluss ϕₚ₂ₐₓ umfassen. Die an der Sekundärspule 11 auftretende Spannung wird von dem Teil von ϕₚ₂ₐₓ hervorgerufen, der von ϕₚ₁ₐₓ nicht mehr kompensiert werden kann. Mit zunehmender Verschiebung des Kerns 12 nach links umfassen immer weniger Windungen der Sekundärspule 11 den Fluss ϕₚ₂ₐₓ, so dass die induzierte Spannung mit der Phasenlage der Primärspule 5 zunimmt. Die Zunahme der Spannung ist proportional zu der Verschiebung des Kerns 12. Diese Beziehung gilt relativ streng. Zur Erzeugung eines Gleichsignals, das sowohl Information über die Weite der Verschiebung, als auch Information über deren Richtung enthält, wird der Realteil oder auch der Imaginärteil des von der Sekundärspule 11 abgenommenen und verstärkten Signals gebildet und gleichgerichtet. Durch Berücksichtigung der Phasenlage kann das Vorzeichen der erzeugten Gleichspannung entsprechend festgelegt werden. Die Polarität des gleichen Teils der erzeugten Gleichspannung ist der Auslenkrichtung zugeordnet.

Die von der Detektorschaltung 27 abgegebene wellige Gleichspannung kann über einfache Filter geglättet werden, wodurch eine Gleichspannung erhalten wird, die proportional der Auslenkung des Kerns 12 ist. Die gute Proportionalität wird im Wesentlichen dadurch erreicht, dass die zwischen den Primärspulen als Radialfluss auftretende Summe aus beiden Axialflüssen ϕ₁+ϕ₂ im Wesentlichen konstant ist und an den Enden des Kerns 12 auftretende Inhomogenitäten des Magnetfelds sowohl von den Primärspulen 5, 6 als auch von der Sekundärspule 11 ferngehalten werden.

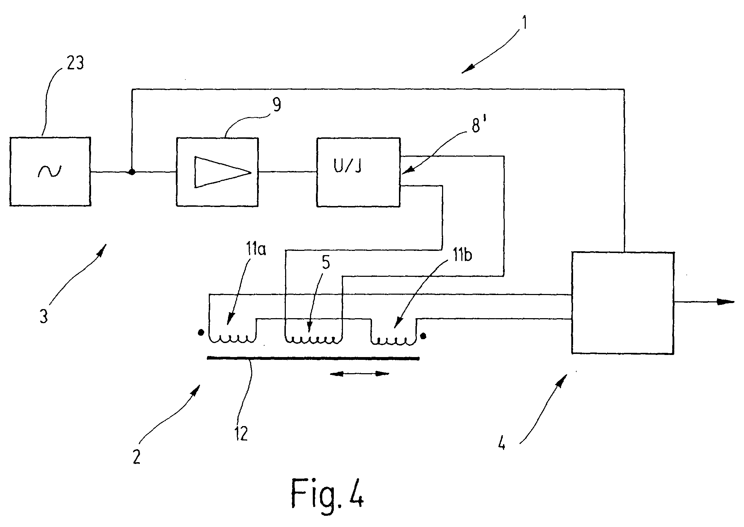

Eine abgewandelte Ausführungsform der Wegmesseinrichtung 1 ist in Figur 4 veranschaulicht. Abweichend von der vorausgehend beschriebenen Wegmesseinrichtung 1 weist die in Figur 4 dargestellte Ansteuerschaltung 3 einen Stromausgang 8' auf. Dieser ist an einem Spannungs/Strom-Wandler vorgesehen, der dem Verstärker 9 nachgeschaltet oder Bestandteil desselben ist. Der Generator 23 erzeugt somit ein Stromsignal, das zur Erregung einer einzigen Primärspule 5 dient, die anstelle der Sekundärspule 11 mittig zwischen zwei außenliegenden Spulen 11a, 11b angeordnet ist, die die Sekundärspulen bilden. Die Sekundärspulen 11a, 11b sind gegenphasig in Reihe geschaltet. Sie erfassen den von der Primärspule 5 in den Kern 12 erzeugten Axiahfluss, der den Kern 12 gleichsinnig durchströmt. Infolge der entgegengesetzten Polung der Sekundärspulen 11a, 11b sind die von dem Axialfluss induzierten Spannungen an den Enden der Spulen 11a, 11b entgegengesetzt und addieren sich, wenn der Kern 12 in Mittelstellung steht, zu Null. Eine Axialverschiebung des Kerns 12 hat eine Veränderung der Größen der Induktionsspannungen an den Sekundärspulen 11a und 11b zur Folge. Zur Auswertung der Spannungen dient eine Auswerteschaltung 4, die der Auswerteschaltung 4 der Ausführungsform nach den Figuren 1 bis 3 entsprechen kann.

Obwohl die induktive Wegmesseinrichtung 2 nach Figur 4 geometrisch den gleichen Aufbau haben kann wie die Wegmesseinrichtung 2 nach Figur 1, ist das sich ausbildende Magnetfeld aufgrund der unterschiedlichen Ansteuerung von dem in Figur 2 dargestellten Magnetfeld verschieden. Die von einer Wechselstromquelle erregte Primärspule 5 prägt eine magnetische Urspannung in dem aus dem Kern 12 und dem Flussleitstück 21 sowie dem dazwischen eingeschlossenen Luftspalt bestehenden Magnetkreis ein. Diese Urspannung hat eine Axialdurchströmung des Kerns 12 zur Folge, die entlang der gesamten Spulenachse 7 eine einheitliche Richtung aufweist. Die Ansteuerung der Primärspule 5 mittels einer Stromquelle, anstelle der sonst üblichen Wechselspannungsquellen, und die dadurch erreichte Konstanz des Primärstroms ergibt jedoch wie bei dem vorstehend beschriebenen Ausführungsbeispiel eine verbesserte Linearität des Zusammenhangs zwischen Auslenkung des Kerns 12 und der Ausgangsspannung der Auswerteeinrichtung 4.

Alternativ zu den vorstehend beschriebenen Ausführungsformen ist es auch möglich, anstelle des Kerns 12 oder zusätzlich zu diesem die Sekundärspule 11 in Bezug auf die Primärspulen zu verschieben, um ein Wegmessignal zu erzeugen.

Eine lineare Wegmesseinrichtung 1 weist einen induktiven Wegaufnehmer 2 auf, der wenigstens drei koaxial zu einem gemeinsamen Kern 12 angeordnete Spulen 5, 6, 11 aufweist. Bei einer ersten Ausführungsform sind die äußeren Spulen 5, 6 von einer Wechselspannung erregt, während die mittlere Spule 11 als Sekundärspule zum Spannungsabgriff dient. Eine Verschiebung des Kerns 12 bewirkt eine Veränderung von Größe und Phasenlage der an der Spule 11 abgegriffenen Spannung. Bei einer zweiten Ausführungsform ist die mittlere Spule 11 durch eine Wechselstromquelle erregt, während die äußeren Spulen 5, 6 dem Spannungsabgriff dienen. Bei beiden Ausführungsformen wird eine gegenüber herkömmlichen induktiven Wegaufnehmern erheblich verbesserte Linearität erreicht.

## Patentansprüche

1. Längenmessanordnung mit einem Längenmesstaster (1),
mit einer Spulenanordnung (S) aus wenigstens drei im wesentlichen koaxial zu einer gemeinsamen Spulenachse angeordneten Spulen (5, 6, 11), von denen wenigstens eine als Primärspule (5) an einen Ausgang (8,8') eines Generators angeschlossen und von diesem mit einem Primärstrom versorgt ist, wobei die übrige Spule oder Spulen als Sekundärspulen an eine Messschaltung anschliessbar sind, und
mit einem durch die Spulen (5, 6, 11) führenden länglichen Kern (12), der in Richtung seiner Längserstreckung verschiebbar gelagert ist,
dadurch gekennzeichnet,
dass der Ausgang (8, 8') und/oder die Spulenanordnung (S) derart ausgebildet ist, dass der Primärstrom bei leerlaufender Sekundärspule oder Sekundärspulen im wesentlichen konstant ist.

2. Längenmessanordnung nach Anspruch 1, dadurch gekennzeichnet, dass zwei Spulen (5, 6) als Primärspulen und die dazwischen angeordnete Spule (11) als Sekundärspule (11) beschaltet sind.

3. Längenmessanordnung nach Anspruch 2, dadurch gekennzeichnet, dass die Primärspulen (5, 6) gegensinnig in Reihe geschaltet sind, wobei die sich aus der Zusammenschaltung der beiden Primärspulen (5, 6) ergebende Eingangsinduktivität des Längenmesstasters (1) weitgehend unabhängig von der Position des längsverschiebbar gelagerten Kerns (12) ist.

4. Längenmessanordnung nach Anspruch 2, dadurch gekennzeichnet, dass die Primärspulen (5, 6) gegenphasig angesteuert sind, so dass sie bezüglich ihrer Spulenlängsrichtung (7) entgegengesetzt gerichtete Flüsse erzeugen.

5. Längenmessanordnung nach Anspruch 1, dadurch gekennzeichnet, dass die Primärspulen (5, 6) derart ausgebildet und angesteuert sind, dass die Summe der Augenblickswerte der von ihnen erzeugten Flüsse von der Verschiebeposition des Kerns (12) unabhängig ist.

6. Längenmesstaster nach Anspruch 1, dadurch gekennzeichnet, dass der Kern (12) eine Längserstreckung aufweist ist, die wenigstens so groß bemessen ist, dass der Kern (12) auch in maximal ausgelenkter Position beidenends aus den die Primärspulen (5, 6) herausragt, und dass die Sekundärspule (11) vorzugsweise im wesentlichen koaxial zu der gemeinsamen Spulenachse (7) der Primärspulen (5, 6) angeordnet ist.

7. Längenmesstaster nach Anspruch 1, dadurch gekennzeichnet, dass der Kern (12) eine hohe Permeabilität aufweist und vorzugsweise zylindrisch ausgebildet ist, wobei außerhalb der Spulen wenigstens ein magnetisches Rückschlussteil (21) vorzugsweise hoher Permeabilität angeordnet ist.

8. Längenmesstaster nach Anspruch 7, dadurch gekennzeichnet, dass das magnetische Rückschlussteil (21) eine Länge aufweist, die größer ist als die Länge des Kerns (12).

9. Längenmessanordnung nach Anspruch 2, dadurch gekennzeichnet, dass die Primärspulen (5, 6) jeweils eine axiale Länge aufweisen, die größer ist als die axiale Länge der Sekundärspule (11).

10. Längenmesstaster nach Anspruch 1, dadurch gekennzeichnet, dass zwischen den Primärspulen (5, 6) und der Sekundärspule (11) Zwischenräume vorgesehen sind.

11. Längenmesstaster nach Anspruch 1, dadurch gekennzeichnet, dass die Primärspulen (5, 6) von einer Wechselspannungsquelle (9) gespeist werden.

12. Längenmesstaster nach Anspruch 1, dadurch gekennzeichnet, dass an die Sekundärspule (11) eine Spannungsdetektorschaltung (4) angeschlossen und mittels eines Widerstands (R) und/oder eines Kondensators (C) definiert abgeschlossen ist.

13. Längenmesstaster,
mit zwei jeweils im wesentlichen koaxial zu einer gemeinsamen Spulenachse angeordneten Sekundärspulen (11a, 11b) und mit wenigstens einer zwischen den Sekundärspulen (11a, 11b) angeordneten Primärspule (5) sowie
mit einem durch die Primärpule (5) und die Sekundärspulen (11a, 11b) führenden länglichen Kern (12), der in Richtung seiner Längserstreckung verschiebbar gelagert ist, und
mit einem Wechselstromgenerator (8'), der an die Primärspule (5) angeschlossen ist, um diese mit einem Wechselstrom festgelegter Größe zu speisen.

14. Längenmesstaster nach Anspruch 14, dadurch gekennzeichnet, dass die Sekundärspulen (11a, 11b) gegenphasig angeschlossen sind, so dass sie bezüglich eines gegebenen Axialflusses entgegengesetzt gerichtete Spannungen abgeben.

15. Längenmesstaster nach Anspruch 14, dadurch gekennzeichnet, dass die Sekundärspulen derart ausgebildet und angesteuert sind, dass die Augenblickswerte der von ihnen erzeugten Spannungen gleich groß sind.

16. Längenmesstaster nach Anspruch 14, dadurch gekennzeichnet, dass der Kern eine Längserstreckung aufweist ist, die wenigstens so groß bemessen ist, dass der Kern auch in maximal ausgelenkter Position beidenends aus den Sekundärspulen herausragt.

17. Längenmesstaster nach Anspruch 14, dadurch gekennzeichnet, dass die Primärspule (5) im wesentlichen koaxial zu der gemeinsamen Spulenachse der Sekundärspulen (11a, 11b) angeordnet ist.

18. Längenmesstaster nach Anspruch 14, dadurch gekennzeichnet, dass der Kern (12) eine hohe Permeabilität aufweist.

19. Längenmesstaster nach Anspruch 14, dadurch gekennzeichnet, dass der Kern (12) zylindrisch ausgebildet ist.

20. Längenmesstaster nach Anspruch 14, dadurch gekennzeichnet, dass außerhalb der Spulen wenigstens ein magnetisches Rückschlussteil (21) vorzugsweise hoher Permeabilität angeordnet ist.

21. Längenmesstaster nach Anspruch 14, dadurch gekennzeichnet, dass das magnetische Rückschlussteil (21) eine Länge aufweist, die größer ist als die Länge des Kerns.

22. Längenmesstaster nach Anspruch 14, dadurch gekennzeichnet, dass das magnetische Rückschlussteil (21) als Rohr ausgebildet ist.

23. Längenmesstaster nach Anspruch 14, dadurch gekennzeichnet, dass zwischen den Primärspulen (11a, 11b) und der Sekundärspule (5) Zwischenräume vorgesehen sind.
